(19) Europäisches Patentamt / European Patent Office / Office européen des brevets

(11) EP 4 043 605 A1

(12) EUROPEAN PATENT APPLICATION
published in accordance with Art. 153(4) EPC

(43) Date of publication:
17.08.2022  Bulletin 2022/33

(51) International Patent Classification (IPC):
C22C 38/28 (2006.01)    C21D 8/12 (2006.01)
B21B 1/24 (2006.01)    B21B 3/00 (2006.01)

(21) Application number: 20903824.9

(22) Date of filing: 18.11.2020

(52) Cooperative Patent Classification (CPC):
B21B 1/24; B21B 3/00; C21D 8/12; C22C 38/28

(86) International application number:
PCT/KR2020/016276

(87) International publication number:
WO 2021/125580 (24.06.2021 Gazette 2021/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.12.2019  KR 20190171695

(71) Applicant: POSCO
Pohang-si, Gyeongsangbuk-do 37859 (KR)

(72) Inventors:
• LEE, Kye-man
Seoul 02798 (KR)
• KANG, Hyung-gu
Pohang-si Gyeongsangbuk-do 37836 (KR)

(74) Representative: Potter Clarkson
The Belgrave Centre
Talbot Street
Nottingham NG1 5GG (GB)

(54) **FERRITIC STAINLESS STEEL HAVING IMPROVED MAGNETIZATION, AND MANUFACTURING METHOD THEREFOR**

(57)    Disclosed is a ferritic stainless steel having improved magnetization including, in percent by weight (wt%), 0.01% or less (excluding 0) of C) 0.003% or less (excluding 0) of N, 15 to 18% of Cr, 0.3 to 1.0% of Mn, 0.2 to 0.3% of Si, 0.005% or less (excluding 0) of Al, 0.005% or less (excluding 0) of Ti, and the balance of Fe and inevitable impurities, and satisfying the following equation,

$$\text{Equation (1): } (Ti+Al+8*(C+N)/Mn) \leq 0.3 \quad (1)$$

(wherein Ti, Al, C, N, and Mn denote amounts (wt%) of the respective elements).

**FIG. 2**

EP 4 043 605 A1

**Description**

[Technical Field]

The present disclosure relates to a ferritic stainless steel, and more particularly, to a ferritic stainless steel having improved magnetization by controlling a crystal texture, and a manufacturing method therefor.

[Background Art]

Induction ranges are cooking appliances that directly heat a cooker with an electromagnetic field by applying a high-frequency current to a coil mounted therein.

While thermal efficiencies (container heating efficiencies) of gas ranges and highlight electric ranges are about 45% and about 65%, respectively, induction ranges having a high thermal efficiency of about 90% may reduce cooking time. In addition, induction ranges are safe because the top plate is not directly heated and easy to clean because spilled food does not stick thereto. Therefore, the market for induction ranges has recently expanded.

In accordance with changing trends of cooking ranges, the market for materials used for induction cookers is growing. Since induction ranges generate heat by magnetic induction, magnetic properties are required in materials for induction cookers. Cast steel sheets, enameled steel sheets, and ferritic stainless steels have been main materials used therefor, and clad steel plates having a multilayered structure in which an aluminum plate and a carbon steel sheet or a ferritic stainless-steel sheet are stacked have also been used for induction cookers, recently.

Induction ranges use resistance heat of eddy current generated by a magnetic field by current coil as a main heat source. Power $P_{ec}$ generated by the eddy current is as follows.

$$Pec = \frac{10^{-9}\,\Pi^2 B^2}{6} \cdot \frac{t^2 f^2}{\rho}$$

In this equation, B is magnetic flux density, t is thickness of a sample, f is frequency, and r is resistivity.

Because the power Pec generated by the eddy current is proportional to the square of the magnetic flux density, it is essential to maximize the magnetic flux density to easily heat an induction range.

Meanwhile, electric steel plates containing silicon are commonly used as materials for electric motors, but ferritic stainless steels having strong magnetic properties having a body centered cubic (BCC) structure are used in an environment that requires corrosion resistance.

However, magnetic properties ferritic stainless steels are inferior to those of electric steel plates. Thus, there are restrictions in application of ferritic stainless steels to materials of western cookware/electric motors that require energy efficiency.

Therefore, there is a need to develop ferritic stainless steels having improved magnetization available for induction heating.

[Disclosure]

[Technical Problem]

Provided are a ferritic stainless steel having improved magnetization by controlling the number of carbonitrides by adjusting components, and a manufacturing method therefor.

[Technical Solution]

In accordance with an aspect of the present disclosure, a ferritic stainless steel having improved magnetization includes, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities, and satisfies the following Equation (1),

Equation (1): (Ti+Al+8*(C+N)/Mn) $\leq$ 0.3

(wherein Ti, Al, C, N, and Mn mean the content (wt%) of each element).

In addition, according to an embodiment of the present disclosure, a distribution of nitrides or carbides may be distributed at a density of 100 pieces/mm$^2$ or less.

In addition, according to an embodiment of the present disclosure, a strength of a {001} crystal texture may be 10.0 or more.

In addition, according to an embodiment of the present disclosure, a Bso value may be 0.5 T or more.

In accordance with another aspect of the present disclosure, a method for manufacturing a ferritic stainless steel having improved magnetization includes: hot-rolling a slab comprising, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities, and satisfying the following Equation (1); hot-rolled annealing the hot-rolled steel sheet; and cold-rolling the hot-rolled steel sheet,

$$\text{Equation (1): } (Ti+Al+8*(C+N)/Mn) \leq 0.3$$

(wherein Ti, Al, C, N, and Mn mean the content (wt%) of each element).

In addition, according to an embodiment of the present disclosure, a cold-rolling reduction ratio may be from 55 to 80%.

In addition, according to an embodiment of the present disclosure, the hot-rolled annealing may be performed in a temperature range of 900 to 1,200 °C .

[Advantageous Effects]

According to embodiments of the present disclosure, a ferritic stainless steel having improved magnetization and a manufacturing method therefor may be provided.

[Description of Drawings]

FIG. 1 is a view illustrating changes in magnetic induction according to crystal texture of a ferritic stainless steel.

FIG. 2 is a view illustrating changes in magnetization with respect to F values of a crystal texture of a ferritic stainless steel.

[Best Mode]

The present disclosure provides a ferritic stainless steel having improved magnetization including, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities, and satisfying the following Equation (1),

$$\text{Equation (1): } (Ti+Al+8*(C+N)/Mn) \leq 0.3$$

(wherein Ti, Al, C, N, and Mn mean the content (wt%) of each element).

[Modes of the Invention]

Hereinafter, embodiments of the present disclosure will be described in detail with reference to the accompanying drawings. The following embodiments are provided to fully convey the spirit of the present disclosure to a person having ordinary skill in the art to which the present disclosure belongs. The present disclosure is not limited to the embodiments shown herein but may be embodied in other forms. In the drawings, parts unrelated to the descriptions are omitted for clear description of the disclosure and sizes of elements may be exaggerated for clarity.

Throughout the specification, the term "include" an element does not preclude other elements but may further include another element, unless otherwise stated.

As used herein, the singular forms are intended to include the plural forms as well, unless the context clearly indicates otherwise.

Hereinafter, embodiments of the present disclosure will be described in detail with reference to the accompanying drawings. First, a ferritic stainless steel will be described, and then a method for manufacturing the ferrite stainless steel will be described.

In ferritic stainless steels, the <100> direction is the easiest direction of magnetization and the <111> direction is the hardest direction of magnetization. Thus, the <100> direction is referred to as an easy magnetization direction and the <111> direction is referred to as a hard magnetization direction.

Meanwhile, a crystal texture refers to how planes and orientations are arranged in a crystal aggregate, and a pattern in which the crystal texture develops in a certain direction is referred to as a crystal texture fiber. The crystal texture showing aggregate properties of crystals is closely related to magnetization.

In conventional ferritic stainless steels manufactured via common processes of continuous casting, hot rolling, cold rolling, and cold annealing, it is known that the overall workability increases as a fraction of a g-fiber increases in the crystal texture. However, the g-fiber crystal texture is not suitable for a use requiring magnetization because the easy magnetization direction is not included therein.

The present inventors have made various studies to improve magnetization of ferritic stainless steels and have found that it is important to suppress formation of a carbonitride leading to formation of a disordered crystal texture.

Formation of a carbonitride may be suppressed by controlling the contents of alloying elements Ti, Al, C, and N, minimizing the S content in a matrix, and adding an appropriate amount of Mn for growing grains.

A ferritic stainless steel having improved magnetization according to the present disclosure includes, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities.

Hereinafter, reasons for numerical limitations on the contents of alloying elements in the embodiment of the present disclosure will be described. Hereinafter, the unit of the component indicates wt% unless otherwise stated.

The content of C is 0.01% or less (excluding 0).

Carbon (C), as an interstitial solid solution strengthening element, improves strength of a ferritic stainless steel. However, when the C content is excessive, an austenite phase is formed at a high temperature and transformed during cooling to form a martensite phase in a final product. Because the martensite phase deteriorates magnetization, an upper limit of the C content may be set to 0.01%.

The content of N is 0.003% or less (excluding 0).

Nitrogen (N), also as an interstitial solid solution strengthening element like C, enhances strength of a ferritic stainless steel. Also, as an austenite phase-stabilizing element, an excess of N causes a problem of forming a martensite phase. N binds to Al or Ti to form a nitride to promote grain nucleation, thereby suppressing formation of a columnar structure efficient for magnetization but promoting formation of a fine equiaxed structure having a disordered crystal texture. Therefore, an upper limit of the N content may be set to 0.003%.

The content of Cr is from 15 to 18%.

Chromium (Cr) is a basic element contained in stainless steels in the largest amount among the elements used to improve corrosion resistance, and the Cr content may be 15% or more to express corrosion resistance. However, an excess of Cr may cause formation of dense oxide scales during hot-rolling resulting in sticking defects and may increase manufacturing costs. Therefore, an upper limit of the Cr content may be set to 18%.

The content of Mn is from 0.3 to 1.0%.

Manganese (Mn) is an element binding to sulfur (S), which is contained in a matrix and inhibits migration of grain boundaries, to form a sulfide. In the present disclosure, Mn is added in an amount of 0.3% or more to promote the growth of crystal grains having the {001} orientation. However, an excess of Mn may cause formation of an austenite phase that deteriorates magnetic properties. Therefore, an upper limit of the Mn content may be set to 1.0%.

The content of Si is from 0.2 to 0.3%.

Silicon (Si), as an alloying element essentially added for deoxidization, improves strength and corrosion resistance and stabilizes a ferrite phase. In the present disclosure, Si as a ferrite-forming element may be added in an amount of 0.2% or more to suppress formation of an austenite phase that inhibits formation of the {001} crystal texture. However, an excess of Si may increase embrittlement to deteriorate workability and may bind to carbon to form a carbide to deteriorate magnetization. Therefore, an upper limit of the Si content may be set to 0.3%.

The content of Al is 0.005% or less (excluding 0).

Aluminum (Al) is an alloying element essentially added for deoxidation, stabilizes a ferrite phase, and binds to N to form a nitride. The nitride serving as a grain nucleation site forms new crystal grains having a disordered crystal texture, thereby deteriorating magnetization. Therefore, an upper limit of the Al content may be set to 0.005%.

The content of Ti is 0.005% or less (excluding 0).

Titanium (Ti) binds to C or N to form a carbonitride. The carbonitride serving as a grain nucleation site to generate new crystal grains having a disordered crystal texture, thereby deteriorating magnetization. Therefore, an upper limit of the Ti content may be set to 0.005%.

The remaining component of the composition of the present disclosure is iron (Fe). However, the composition may include unintended impurities inevitably incorporated from raw materials or surrounding environments. In the present disclosure, addition of other alloy components in addition to the above-described alloy components is not excluded. The inevitable impurities may be phosphorus (P) and sulfur (S). The impurities are not specifically mentioned in the present disclosure, as they are known to any person skilled in the art of manufacturing.

Although the {001} orientation that is a preferred orientation of solidification develops in a continuous casting process of a ferritic stainless steel, the {001} orientation causes a problem of deteriorating formability and forming ridging that is an intrinsic surface defect of ferrite. Therefore, it is common to minimize formation of a coarse columnar structure using an electronic stirring device during continuous casting of the ferritic stainless steel to maximize the {111} crystal texture and suppress formation of ridging.

Meanwhile, in a crystalline material, magnetization (magnetic property) is also affected by crystal orientation. Because the <100> direction is the easiest direction of magnetization and the <111> direction is the hardest direction of magnetization in ferritic stainless steels, the <100> direction is referred to as an easy magnetization direction, and the <111> direction is referred to as a hard magnetization direction. Therefore, it is important to maximize crystal grains aligned in the <100> direction, as the easy magnetization direction, to improve magnetization of a ferritic stainless steel.

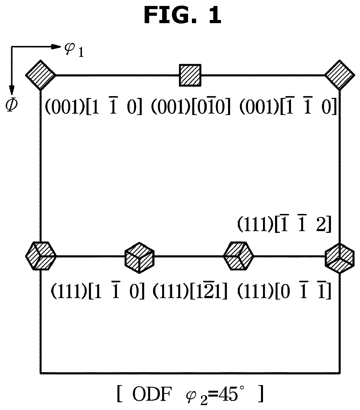

FIG. 1 is a view illustrating changes in magnetic induction according to crystal texture of a ferritic stainless steel.

A rectangle of FIG. 1 shows j2=45° plane of an orientation distribution function (ODF), which is the most widely used to express the crystal texture. Referring to FIG. 1, orientations having the {001} plane such as the {001}<110> orientation and the {001}<010> orientation are arranged at the upper end (F=0°) of the ODF, and orientations having the {111} plane such as the {111}<110> orientation and the {111}<121> orientation are arranged in the middle (F=55°) of the ODF.

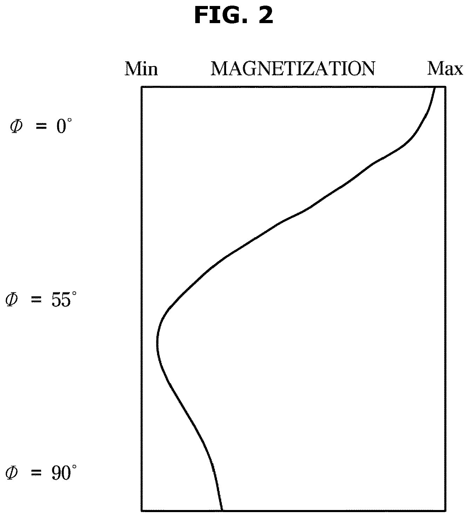

FIG. 2 is a view illustrating changes in magnetization with respect to F values of a crystal texture of a ferritic stainless steel.

Referring to FIG. 2, it may be confirmed that a maximum magnetization was exhibited when F is 0°, and the magnetization deteriorates as F increases to 55°. Also, it may be confirmed that the magnetization slightly increases as F increases from 55° to 90°.

Referring to FIGS. 1 and 2, when a volume fraction of the {111} crystal texture inefficient for magnetization is greater than that of the {001} crystal texture efficient for magnetization, it may be confirmed that magnetic properties of the ferritic stainless steel sheet rapidly decrease. Therefore, in the present disclosure, the fraction of the {001} crystal texture is increased as much as possible to improve magnetization of the ferritic stainless steel.

Meanwhile, a carbonitride formed in molten steel during the steelmaking process acts as a nucleation site in the solidification process. Accordingly, grain nucleation is promoted to form new crystal grains having a disordered crystal texture, the {001} crystal texture is weakened, and a fine cast structure is formed.

Therefore, it is necessary to manage the alloying elements to minimize formation of a nitride and a carbide.

According to an embodiment of the present disclosure, the ferritic stainless steel having improved magnetization satisfying the above-described composition of alloying elements may satisfy the following Equation (1).

$$\text{Equation (1): } (Ti+Al+8*(C+N)/Mn) \leq 0.3$$

Here, Ti, Al, C, N, and Mn mean the content (wt%) of each element.

The present inventors have drawn Equation (1) to maximize formation of the columnar structure including the {001} crystal texture by minimizing formation of the carbonitride. Equation (1) above has been drawn in consideration that formation of the carbonitride is suppressed by lowering not only the contents of C and N but also the contents of Al and Ti, which are elements binding to C or N to form a carbonitride, and the growth of crystal grains is promoted by using a certain amount of Mn binding to S that is an impurity inhibiting the growth of the {001} crystal grains.

It was confirmed that the lower the value of Equation (1), the lower distribution of the carbonitride and the easier the formation of a columnar structure including the {001} crystal texture. Specifically, when the value of Equation (1) exceeds 0.3, distribution of the nitride or the carbide exceeds 100 pieces/mm$^2$ in a final steel sheet, failing to obtain the fraction of the {001} crystal texture. As a result, the ferritic stainless steel cannot obtain magnetization. Therefore, an upper limit of the value of Equation (1) is set to 0.3.

As described above, it is essential to maximize the {001} crystal texture and minimize the {111} crystal texture to improve magnetization of the ferritic stainless steel.

In this point of view, the present disclosure introduces strength of the {001} crystal texture to quantify the crystal texture. That is, in a ferritic stainless steel, as the strength of the {001} crystal texture increases, magnetization may be improved. Therefore, in the present disclosure, the strength of the {001} crystal texture is controlled to be 10.0 or more.

Accordingly, the ferritic stainless steel according to an embodiment of the present disclosure may have a Bso value of 0.5 T or more. Bso refers to a magnetic flux density measured in a magnetic field with a magnetization force of 5000 A/m and is used as an index indicating magnetization.

As the Bso value increases, induction heating is easier, and thus the greater Bso value is the more efficient therefor. When the Bso is less than 0.5 T, magnetization does not easily occur compared to a magnetic field applied thereto, so that energy efficiency thereof decreases. When a steel having a Bso value of less than 0.5 T is applied to a cooking container for an induction range, a heating rate decreases. Thus, in the present disclosure, the Bso is controlled to be 0.5 T or more.

Hereinafter, a process of manufacturing a ferritic stainless steel having improved magnetization according to an embodiment of the present disclosure will be described. A method for manufacturing the ferritic stainless steel having improved magnetization according to an embodiment includes: hot-rolling a slab including, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities, and satisfying the following Equation (1); hot-rolled annealing the hot-rolled steel sheet; and cold-rolling the hot-rolled steel sheet.

$$\text{Equation (1): } (Ti+Al+8*(C+N)/Mn) \leq 0.3$$

In the Equation, Ti, Al, C, N, and Mn mean the content (wt%) of each element.

Descriptions of reasons for numerical limitations on the contents of alloying elements are as described above.

A stainless steel slab including the composition is heated. A heating temperature for the slab may be in the range of 1100°C to 1300°C. When the heating temperature exceeds 1300°C, liquefaction occurs in a segregated region in a fine structure causing breaks during hot rolling. When the heating temperature is below 1100°C, hot-rolling is not easily conducted.

The heated slab is processed into a hot-rolled steel sheet by a hot-rolling process.

The hot-rolled steel sheet may be subjected to hot-rolled annealing, if required. In the case where the hot annealing is performed, an annealing temperature may be from 900°C to 1200°C. When the annealing temperature is below 900°C, recrystallization does not sufficiently occur, failing to obtain a uniform microstructure. When the annealing temperature exceeds 1200°C, magnetic properties deteriorate and plate shapes are deformed. In this case, a thickness of the hot-rolled ferritic stainless steel may be from 3 to 6 mm.

Then, a cold-rolled steel sheet is prepared by a cold-rolling process.

In order to develop the {001} crystal texture efficient for magnetization, a total reduction ratio should be controlled during cold rolling. Based on the results of an experiment conducted by the present inventors, the {001} crystal texture efficient for magnetization was developed in a cold-rolled steel sheet having a final thickness by performing cold-rolling with a reduction ratio of 55 to 80%.

Here, the reduction ratio is defined as (thickness of steel sheet before cold-rolling - thickness of steel sheet after cold-rolling)/(thickness of steel sheet before cold-rolling).

As described above, the {001} crystal texture efficient for magnetization may be maximally developed without causing breakage by preparing a final cold-rolled steel sheet by controlling the cold-rolling reduction ratio while adjusting the alloying elements.

A distribution of nitrides or carbides in the cold-rolled steel sheet prepared as described above is 100 pieces/mm$^2$ or less.

In addition, in the prepared cold-rolled steel sheet, a strength of the {001} crystal texture is 10.0 or more and the Bso value is 0.5 T or more.

In addition, a thickness of the cold-rolled ferritic stainless steel may be from 0.4 to 1.2 mm.

Examples

Hereinafter, the present disclosure will be described in more detail with reference to the following examples.

Cast strips of a ferritic stainless steel having chemical compositions of various alloying elements shown in Table 1 below and having a thickness of 250 mm were prepared. The strips were hot-rolled using a roughing mill and a finishing mill according to any method commonly used in the art to prepare hot-rolled ferritic stainless steel sheets having a thickness 3 to 6.0 mm.

Table 1

| Example | C | Si | Mn | Cr | Al | Ti | N | Ti+Al+8 *(C+N) /Mn |
|---|---|---|---|---|---|---|---|---|
| Example 1 | 0.007 | 0.28 | 0.51 | 16.2 | 0.003 | 0.004 | 0.002 | 0.15 |
| Example 2 | 0.002 | 0.21 | 0.63 | 16.3 | 0.003 | 0.003 | 0.002 | 0.06 |
| Comparative Example 1 | 0.058 | 0.23 | 0.78 | 16.4 | 0.076 | 0.002 | 0.020 | 0.90 |
| Comparative Example 2 | 0.039 | 0.31 | 0.49 | 16.5 | 0.003 | 0.001 | 0.043 | 1.35 |
| Comparative Example 3 | 0.007 | 0.29 | 0.49 | 16.5 | 0.003 | 0.001 | 0.021 | 0.47 |
| Comparative Example 4 | 0.006 | 0.05 | 0.24 | 16.4 | 0.003 | 0.003 | 0.006 | 0.42 |
| Comparative Example 5 | 0.005 | 0.27 | 0.12 | 16.4 | 0.003 | 0.051 | 0.001 | 0.85 |
| Comparative Example 6 | 0.008 | 0.25 | 0.54 | 15.7 | 0.084 | 0.003 | 0.002 | 0.31 |
| Comparative Example 7 | 0.003 | 0.89 | 0.50 | 16.3 | 0.004 | 0.003 | 0.002 | 0.09 |
| Comparative Example 8 | 0.004 | 0.25 | 0.23 | 15.2 | 0.003 | 0.002 | 0.002 | 0.23 |
| Comparative Example 9 | 0.007 | 0.28 | 0.51 | 16.2 | 0.003 | 0.004 | 0.002 | 0.15 |
| Comparative Example 10 | 0.007 | 0.28 | 0.51 | 16.2 | 0.003 | 0.004 | 0.002 | 0.15 |

Subsequently, the hot-rolled steel sheets according to Examples and Comparative Examples were cold-rolled under the conditions shown in Table 2 below with different cold-rolling reduction ratios, followed by final annealing to prepare cold-rolled, annealed ferritic stainless steels having a thickness of 0.4 to 1.2 mm.

Distribution of the carbonitride contained in the final cold-rolled, annealed steel sheet was measured using an SEM-EDS device. An analysis method of automatically measuring a size and components of an oxide with a magnification of 1,000× or more in an area of 1 mm in width and 1 mm in length of a cross-section of a final product was used, and an average of at least 5 areas was shown.

The crystal texture was measured on a transverse cross-section of the final cold-rolled, annealed steel sheets by electron backscatter diffraction (EBSD).

Orientation distribution function (ODF) was calculated based on EBSD data and strength of the {001} orientation was used as an index of the crystal texture.

In addition, samples of the ferritic stainless steel sheets having a size of 60 mm x 60 mm were prepared such that a rolling direction and a magnetizing direction were located at 0°, 15°, 30°, 45°, 60°, 75°, and 90°. Magnetic flux density was measured in a magnetic field of 5000 A/m using a single sheet tester, and the $B_{50}$, as an average of the 7 directions, was indicated as an index of magnetization.

Table 2

| Example | Ti+Al+8*(C+N)/Mn | Cold-rolling reduction ratio (%) | No. of carbonitride (pieces/mm $^2$) | {001} strength | $B_{50}$ [T] |
|---|---|---|---|---|---|
| Example 1 | 0.15 | 65 | 29 | 13.8 | 0.68 |
| Example 2 | 0.06 | 65 | 52 | 15.3 | 0.74 |
| Comparative Example 1 | 0.90 | 65 | 3821 | 2.1 | 0.03 |
| Comparative Example 2 | 1.35 | 65 | 2665 | 4.4 | 0.08 |
| Comparative Example 3 | 0.47 | 65 | 339 | 6.1 | 0.18 |
| Comparative Example 4 | 0.42 | 65 | 651 | 5.1 | 0.31 |
| Comparative Example 5 | 0.85 | 65 | 759 | 3.8 | 0.19 |

(continued)

| Example | Ti+Al+8*(C+N)/Mn | Cold-rolling reduction ratio (%) | No. of carbonitride (pieces/mm $^2$) | {001} strength | $B_{50}$ [T] |
|---|---|---|---|---|---|
| Comparative Example 6 | 0.31 | 65 | 245 | 3.9 | 0.23 |
| Comparative Example 7 | 0.09 | 65 | 138 | 4.1 | 0.22 |
| Comparative Example 8 | 0.23 | 65 | 61 | 6.7 | 0.27 |
| Comparative Example 9 | 0.15 | 50 | 29 | 5.8 | 0.18 |
| Comparative Example 10 | 0.15 | 85 | 29 | 7.8 | 0.28 |

In the present disclosure, a magnetic flux density ($B_{50}$) of 0.5 T or more was obtained to apply the ferritic stainless steel to a material for induction cookers.

In the case of Examples 1 and 2, the composition range proposed in the present disclosure was satisfied and the (Ti+Al+8*(C+N)/Mn) value to be 0.3 or less, and thus formation of a disordered crystal texture may be suppressed below 100 pieces/mm$^2$ and the S content was minimized in the matrix. Therefore, the {001} strength of 10.0 or more was obtained, and the Bso value of 0.5 T or more was obtained, indicating that improvement of magnetization.

In Comparative Examples 1 to 6, the (Ti+Al+8*(C+N)/Mn) value exceeded 0.3 due to excessive amounts of C, N, Ti, and Al, and thus the carbonitride is excessively formed in the final cold-rolled, annealed steel sheets. Accordingly, development of the {001} crystal texture was suppressed and the {111} crystal texture was developed, and thus the {001} strength was less than 10.0 and the Bso value was less than 0.31.

In Comparative Example 7, although the (Ti+Al+8*(C+N)/Mn) value was controlled below 0.3, the carbonitride was excessively formed greater than 100 pieces/mm$^2$ due to the excessive amount of Si. As a result, the {001} crystal texture could not be developed, and thus the Bso value was derived as 0.22.

In Comparative Example 8, although the (Ti+Al+8*(C+N)/Mn) value was controlled below 0.3 and the Si content was controlled appropriately, the Mn content was 0.23% which is below a lower limit of 0.3 according to the present disclosure, failing to sufficiently remove S that inhibits migration of grain boundaries. As a result, the {001} crystal texture could not be developed and the Bso value was derived as 0.27.

Referring to Table 2, in the case of Comparative Examples 9 and 10, although the compositions proposed in the present disclosure were satisfied and the number of precipitates was appropriately adjusted, the cold-rolling reduction ratio was below 55% or above 80%, and thus the final cold-rolled, annealed steel sheet had a low {001} strength below 10.0, and the Bso values were 0.18 and 0.28 which were below 0.5.

As described above, the ferritic stainless steel prepared according to an embodiment of the present disclosure may have magnetic properties applicable to materials of western cookware/electric motors that require energy efficiency by suppressing development of the {111} crystal texture and developing the {001} crystal texture by controlling the annealing temperature for the hot-rolled steel sheet.

While the present disclosure has been particularly described with reference to exemplary embodiments, it should be understood by those of skilled in the art that various changes in form and details may be made without departing from the spirit and scope of the present disclosure.

[Industrial Applicability]

The ferritic stainless steel according to the present disclosure has a Bso value of 0.5 T or more and thus may be applied to materials of western cookware/electric motors that require energy efficiency.

**Claims**

1. A ferritic stainless steel having improved magnetization comprising, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities, and satisfying the following Equation (1),

$$\text{Equation (1): } (Ti+Al+8*(C+N)/Mn) \leq 0.3$$

wherein Ti, Al, C, N, and Mn mean the content (wt%) of each element.

2. The ferritic stainless steel according to claim 1, wherein a distribution of nitrides or carbides is 100 pieces/mm$^2$ or less.

3. The ferritic stainless steel according to claim 1, wherein a strength of a {001} crystal texture is 10.0 or more.

4. The ferritic stainless steel according to claim 1, wherein a Bso value is 0.5 T or more.

5. A method for manufacturing a ferritic stainless steel having improved magnetization, the method comprising:

   hot-rolling a slab comprising, in percent by weight (wt%), 0.01% or less (excluding 0) of carbon (C), 0.003% or less (excluding 0) of nitrogen (N), 15 to 18% of chromium (Cr), 0.3 to 1.0% of manganese (Mn), 0.2 to 0.3% of silicon (Si), 0.005% or less (excluding 0) of aluminum (Al), 0.005% or less (excluding 0) of titanium (Ti), and the balance of iron (Fe) and inevitable impurities, and satisfying the following Equation (1);
   hot-rolled annealing the hot-rolled steel sheet; and
   cold-rolling the hot-rolled steel sheet,

$$\text{Equation (1): } (Ti+Al+8*(C+N)/Mn) \leq 0.3$$

   wherein Ti, Al, C, N, and Mn mean the content (wt%) of each element.

6. The method according to claim 5, wherein a cold-rolling reduction ratio is from 55 to 80%.

7. The method according to claim 5, wherein the hot-rolled annealing is performed in a temperature range of 900 to 1,200°C.

# FIG. 1

$\varphi_1$

$\Phi$

(001)[1 $\bar{1}$ 0] (001)[0$\bar{1}$0] (001)[$\bar{1}$ $\bar{1}$ 0]

(111)[$\bar{1}$ $\bar{1}$ 2]

(111)[1 $\bar{1}$ 0] (111)[1$\bar{2}$1] (111)[0 $\bar{1}$ $\bar{1}$]

[ ODF $\varphi_2$=45° ]

# FIG. 2

Min    MAGNETIZATION    Max

$\Phi = 0°$

$\Phi = 55°$

$\Phi = 90°$

<div align="center">

**INTERNATIONAL SEARCH REPORT**

</div>

| | International application No. |
|---|---|
| | **PCT/KR2020/016276** |

**A. CLASSIFICATION OF SUBJECT MATTER**

**C22C 38/28**(2006.01)i; **C21D 8/12**(2006.01)i; **B21B 1/24**(2006.01)i; **B21B 3/00**(2006.01)i

According to International Patent Classification (IPC) or to both national classification and IPC

**B. FIELDS SEARCHED**

Minimum documentation searched (classification system followed by classification symbols)

C22C 38/28(2006.01); C21D 1/76(2006.01); C21D 8/02(2006.01); C21D 8/06(2006.01); C21D 8/12(2006.01); C22C 38/00(2006.01); C22C 38/38(2006.01); C22C 38/60(2006.01); H01F 1/147(2006.01); H01F 3/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자화(magnetization), 페라이트(ferrite), 스테인리스(stainless), 탄소(C), 질소(N), 크롬(Cr), 망간(Mn), 규소(Si), 알루미늄(Al), 티타늄(Ti)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0084074 A (NIPPON STEEL & SUMIKIN STAINLESS STEEL CORPORATION) 21 July 2015 (2015-07-21)<br>See paragraphs [0022]-[0026] and [0175]-[0178]; and claims 6-8. | 1-7 |
| X | WO 2005-112053 A1 (SHIIN-ETSU CHEMICAL CO., LTD. et al.) 24 November 2005 (2005-11-24)<br>See paragraph [0054]; and claim 1. | 1-7 |
| A | KR 10-2003-0003848 A (POSCO) 14 January 2003 (2003-01-14)<br>See claims 1-2. | 1-7 |
| A | JP 2018-184660 A (JFE STEEL CORP.) 22 November 2018 (2018-11-22)<br>See paragraph [0018]. | 1-7 |
| A | KR 10-1842417 B1 (POSTECH RESEARCH AND BUSINESS DEVELOPMENT FOUNDATION) 26 March 2018 (2018-03-26)<br>See paragraphs [0014]-[0020]. | 1-7 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 February 2021** | **25 February 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2020/016276** |

| Patent document cited in search report | | | Publication date (day/month/year) | Patent family member(s) | | | Publication date (day/month/year) |
| --- | --- | --- | --- | --- | --- | --- | --- |
| KR | 10-2015-0084074 | A | 21 July 2015 | BR | 112013032272 | A2 | 20 December 2016 |
| | | | | CN | 103608479 | A | 26 February 2014 |
| | | | | CN | 103608479 | B | 07 September 2016 |
| | | | | CN | 104975237 | A | 14 October 2015 |
| | | | | CN | 104975237 | B | 23 June 2017 |
| | | | | EP | 2722411 | A1 | 23 April 2014 |
| | | | | EP | 2722411 | A4 | 02 March 2016 |
| | | | | EP | 2722411 | B1 | 08 April 2020 |
| | | | | ES | 2788506 | T3 | 21 October 2020 |
| | | | | JP | 2013-001958 | A | 07 January 2013 |
| | | | | JP | 2013-001962 | A | 07 January 2013 |
| | | | | JP | 2013-053366 | A | 21 March 2013 |
| | | | | JP | 5745345 | B2 | 08 July 2015 |
| | | | | JP | 5804792 | B2 | 04 November 2015 |
| | | | | JP | 5921352 | B2 | 24 May 2016 |
| | | | | KR | 10-1600156 | B1 | 04 March 2016 |
| | | | | KR | 10-1688353 | B1 | 20 December 2016 |
| | | | | KR | 10-2014-0014275 | A | 05 February 2014 |
| | | | | TW | 201307582 | A | 16 February 2013 |
| | | | | TW | I480391 | B | 11 April 2015 |
| | | | | US | 10358707 | B2 | 23 July 2019 |
| | | | | US | 10513763 | B2 | 24 December 2019 |
| | | | | US | 2014-0216614 | A1 | 07 August 2014 |
| | | | | US | 2017-0349988 | A1 | 07 December 2017 |
| | | | | US | 2019-0241998 | A1 | 08 August 2019 |
| | | | | US | 9771640 | B2 | 26 September 2017 |
| | | | | WO | 2012-173272 | A1 | 20 December 2012 |
| WO | 2005-112053 | A1 | 24 November 2005 | CN | 1906714 | A | 31 January 2007 |
| | | | | EP | 1763042 | A1 | 14 March 2007 |
| | | | | EP | 1763042 | A4 | 23 March 2011 |
| | | | | KR | 10-2007-0014111 | A | 31 January 2007 |
| | | | | TW | 200623167 | A | 01 July 2006 |
| | | | | TW | I305924 | B | 01 February 2009 |
| | | | | US | 2009-0224613 | A1 | 10 September 2009 |
| | | | | WO | 2005-112053 | A1 | 27 March 2008 |
| KR | 10-2003-0003848 | A | 14 January 2003 | KR | 10-0729526 | B1 | 15 June 2007 |
| JP | 2018-184660 | A | 22 November 2018 | CN | 110546293 | A | 06 December 2019 |
| | | | | JP | 6432701 | B2 | 05 December 2018 |
| | | | | KR | 10-2019-0131079 | A | 25 November 2019 |
| | | | | TW | 201843318 | A | 16 December 2018 |
| | | | | TW | I673371 | B | 01 October 2019 |
| | | | | US | 2020-0299800 | A1 | 24 September 2020 |
| | | | | WO | 2018-198834 | A1 | 01 November 2018 |
| KR | 10-1842417 | B1 | 26 March 2018 | | None | | |

Form PCT/ISA/210 (patent family annex) (July 2019)